(19) Europäisches Patentamt
European Patent Office
Office européen des brevets

(11) Publication number: **0 230 143 B1**

(12) # EUROPEAN PATENT SPECIFICATION

(45) Date of publication of the patent specification: **15.11.89**

(51) Int. Cl.⁴: **C08K 5/39**, C08K 5/51, C08L 73/00, C08L 23/04 // (C08L23/04, 73:00)

(21) Application number: **86310154.9**

(22) Date of filing: **24.12.86**

(54) **Photodegrading agent, photodegradable ethylene polymer compositions and articles produced therefrom.**

(30) Priority: **31.12.85 CH 5564/85**

(43) Date of publication of application: **29.07.87 Bulletin 87/31**

(45) Publication of the grant of the patent: **15.11.89 Bulletin 89/46**

(84) Designated Contracting States: **AT BE CH DE ES FR GB GR IT LI NL SE**

(56) References cited:
**FR-A- 2 099 518**
**FR-A- 2 179 245**
**US-A- 3 676 401**

**CHEMICAL ABSTRACTS, vol. 83, no. 12, 22nd September 1975, page 38, abstract no. 98475v, Columbus, Ohio, US; & JP-A-75 34 044 (SUMITOMO CHEMICAL CO., LTD) 02-04-1975**

(73) Proprietor: **THE DOW CHEMICAL COMPANY, 2030 Dow Center Abbott Road P.O. Box 1967, Midland Michigan 48640-1967(US)**

(72) Inventor: **Rolland, Loic Pierre, Tiefenhofstrasse 27, CH-8820 Wadenswil(CH)**

(74) Representative: **Burford, Anthony Frederick et al, W.H. Beck, Greener & Co. 7 Stone Buildings Lincoln's Inn, London WC2A 3SZ(GB)**

**EP 0 230 143 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to ethylene polymer compositions and articles produced therefrom which degrade rapidly when exposed to ultraviolet light. The invention relates further to photodegrading agents and their use for enhancing the photodegradability of ethylene polymers.

Films and other articles produced of ethylene polymers have found wide acceptance due, for example, to their excellent flexibility and their chemical inertness toward aqueous and nonaqueous liquids.

As a result of their widespread utility, for example as packaging material, the disposal of these materials has become a serious problem, particularly in picnic areas, on roadsides and similar places.

Therefore, many efforts have been devoted by people skilled in the art to develop ethylene polymer articles - which without substantially affecting their good physical properties - degrade more rapidly upon exposure to sunlight or ultraviolet light than conventional ethylene polymer articles.

For many years, for example from BE patent 809568 and U.S. patent 3,676,401, it has been known that ethylene copolymers which contain carbonyl groups such as ethylene/carbon monoxide polymers are degradable by ultraviolet light. However, films produced from these copolymers do not have sufficient strength for many end use applications. In FR-A-2,179,245 (equivalent to US-A-3,860,538) it is stated that compositions consisting of polyethylene and ethylene/carbon monoxide copolymers are photodegradable.

In Chemical Abstract, vol 83, no 12, 1975, page 38, abstract 98475v photodegradable polyolefin compositions containing carbon monoxide/vinyl copolymers are stated.

Various photosensitizing additives for increasing the photodegrability of ethylene polymers have been suggested by persons skilled in the art. In CA patent 1073581 it is suggested to add an anatase titanium dioxide material to ethylene homo- or copolymers such as ethylene/vinyl acetate or ethylene/ethyl acrylate for enhancing the photodegradability of the produced polyethylene films. However, it is known that the photodegradability of the polymers increases progressively with the concentration of the photosensitizing material only until the latter reaches a certain level. Beyond this value, addition of more photosensitizing material does not appreciably increase the degradation rate of the ethylene polymers.

In US Patent 3 676 401, it is suggested to increase the photodegradability of ethylene/carbon monoxide polymers by adding thereto organometallic compounds containing carboxylic groups. Due to their above mentioned low mechanical strength, films produced from such polymers are not useful for many applications and have therefore not found wide acceptance in the market. Further it is not known to use said organometallic compounds together with ethylene/carbon monoxide polymers for increasing the photodegradability of other ethylene polymers such as linear low density polyethylene.

DE-A 2 136 704 (corresponding to FR-A 2 099 518) discloses the use of dithiocarbamates and dithiophosphates to increase the photodegradation of polyethylene and other vinyl polymers. There is no reference to the use of ethylene/carbon monoxide polymers.

US Patent 3 825 627 suggests including small amounts of polypropylene in polymer compositions of polyethylene as well as the maximum effective concentration of a photosensitizing material for increasing the degradation rate of the polymer compositions. Although a significant increase in the degradation rate was attained by the addition of polypropylene, it would still be desirable to increase the degradation rate of ethylene polymer compositions.

Surprisingly, it has been found that the incorporation of both an ethylene/carbon monoxide polymer and a heavy metal dithiocarbamate or dithiophosphate photosensitizing material into a composition comprising an ethylene polymer substantially increases the degration rate of the composition. Surprisingly, the blend of a photosensitizing material and an ethylene/carbon monoxide polymer increases the photodegradability of an ethylene polymer composition considerably more than either the photosensitizing material or the ethylene/carbon monoxide polymer separately.

Accordingly, the present invention provides a new photodegrading agent comprising a photosensitizing material and an ethylene/carbon monoxide polymer wherein the photosensitizing material is a heavy metal dithiocarbamate or heavy metal dithiophosphate said heavy metal having an atomic number greater than 21 exclusive of the metals of Groups 1A, 2A and 3B of Mendeleeff's Periodic Table of Elements.

Another aspect of the present invention is the use of a photodegrading agent comprising a said photosensitizing material and an ethylene/carbon monoxide polymer for enhancing the photodegradability of an ethylene polymer, for example, a linear low density polyethylene.

A further aspect of the present invention is a photodegradable ethylene polymer composition containing an ethylene polymer and a photodegrading agent which agent comprises a said photosensitizing material and an ethylene/carbon monoxide polymer.

The photodegrading agent used in the practice of the present invention is employed as an additive to ethylene polymers. Predictable degradation periods of the ethylene polymer compositions and of the articles prepared therefrom can be obtained by addition of the photodegrading agent.

A further aspect of the invention is an article, preferably a film, produced from the photodegradable ethylene polymer composition.

The photodegradable ethylene polymer compositions and articles produced therefrom substantially retain the physical properties of the ethylene polymer during fabrication of articles like films and during normal usage of the articles but upon exposure to sunlight or other ultraviolet light sources such compositions and articles degrade at a faster rate than ethylene polymer compositions comprising comparable amounts of a said photosensitizing material alone or an ethylene/carbon monoxide polymer alone.

The novel photodegradable ethylene polymer compositions of the present invention are particularly useful as molding and extrusion compositions for the production of disposable articles conventionally produced from polyethylene and other ethylene polymers. Exemplary disposable articles include containers such as boxes, cups, bags, cartons, tubes, bowls, pots, and baskets; mulch films for use in agriculture; and wrapping and packaging films.

Ethylene/carbon monoxide polymers suitably employed in the photodegrading agent and photodegradable ethylene polymer composition of the present invention have preferably a melt index of 0.1 to 100 dg/min., most preferably of 1 to 20 dg/min. The amount of carbon monoxide in the copolymer is generally from 0.2, preferably from 1, most preferably from 5, weight percent and generally up to 25, preferably up to 20, most preferably up to 15, weight percent, based on the total weight of the ethylene/carbon monoxide polymer. Ethylene/carbon monoxide polymers are known. Methods for preparing such ethylene/carbon monoxide polymers are for example described in US patent 2 641 590 and in French patent application FR 2 388 842.

The choice of the most appropriate ethylene/carbon monoxide polymer included in the photodegrading agent depends on various factors, e.g. on the desired photodegradation rate and type of the ethylene polymer to which the photodegrading agent is added. One skilled in the art can choose the physical properties of the ethylene/carbon monoxide polymer, e.g. its melt index, in such a manner that the ethylene/carbon monoxide polymer is uniformly dispersible in the ethylene polymer and otherwise easily processable therewith.

Further additives such as known antioxidants can be added to the ethylene/carbon monoxide polymer.

By "photosensitizing material" is meant a material know to become activated to be a catalyst for photodegradation in the presence of ultraviolet light and act to promote the degradation of ethylene polymers containing them upon exposure to outdoor weathering.

The photosensitizing materials used in the present invention are dithiocarbamates and dithiophosphates of the heavy metals, i e. those having atomic numbers greater than 21 and exclusive of the metals of Groups 1A, 2A, and 3B of the Periodic Table of Elements of Mendeleeff as set forth in the Handbook of Chemistry and Physics, 48th Edition, The Chemical Rubber Co. (1967–1968). The heavy metal is preferably iron, zinc, copper, lead and tellurium. Other metals such as, for example, cobalt, nickel, manganese, silver, palladium, molybdenum, chromium, tungsten and cerium are also suitable.

Representative preferred complexes are the heavy metal dithiocarbamates having the general formula

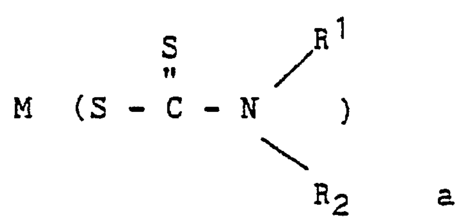
(I),

wherein R1 and R2 are independently a hydrocarbon radical, preferably alkyl having from 1 to 18 carbon atoms, or are joined together to form a heterocyclic ring together with the nitrogen atom, preferably a saturated or unsaturated ring of 4-6 carbon atoms, most preferably 4 or 5 carbon atoms, a is a whole number corresponding to the valence of M and M is a heavy metal as defined hereinbefore.

The hydrocarbon radicals are for example alkyl, aralkyl, aryl or cycloalkyl. It is possible that in a single complex containing four dithiocarbamato groups there may be as many as 8 different hydrocarbon radicals. Preferred heavy metal dithiocarbamates are tris(N,N-di-n-butyldithiocarbamato) iron (III), tris-(N,N-dimethyldithiocarbamato)bismuth (III), bis(N,N-dimethyldithiocarbamato)copper (II), bis (N,N-dimethyldithiocarbamato)lead (II), tetrabis(N,N-diethyldithiocarbamato)tellurium (IV), bis(dimethyldithiocarbamato)zinc (II), bis (N,N-dipropyl dithiocarbamato) nickel (II), bis(N,N-dihexyldithiocarbamato)cobalt (II), tris(dioctyldithiocarbamato)chromium (III), tris(N,N-di-lauryldithiocarbamato)iron (III), tris(N,N-distearyl-dithiocarbamato)iron (III), tris(N,N-dibenzyldithiocarbamato)iron (III), tris(N,N-diphenyldithiocarbamato)iron (III), tris(N,N-dinaphthyldithiocarbamato)iron (III), bis(N-phenyl-N-benzyldithiocarbamato) (N-methyl-N-ethyl-dithiocarbamato)iron (III), tris(dicyclohexyldithiocarbamato)iron (III) and the foregoing dithiocarbamates of other heavy metals, Tris(N,N-di-n-butyldithiocarbamato)iron (III) is the most preferred photosensitizing material.

Preferred dithiophosphates which are suitable are represented by the general formula II:

$$M[S - \overset{\overset{\displaystyle S}{\|}}{\underset{\underset{\displaystyle OR_2}{|}}{P}} - OR_1]a \qquad (II),$$

wherein R1, R2 and M and a are as defined hereinbefore.

The photodegrading agent used in the practice of the present invention contains generally from 30 ppm, preferably from 100 ppm, more preferably from 1,000 ppm and most preferably from 2,500 ppm, up to 250,000 ppm, preferably up to 100,000 ppm, more preferably up to 50,000 ppm and most preferably up to 15,000 ppm of the photosentitizing material, based on the weight of the ethylene/carbon monoxide polymer.

For producing the photodegrading agent used in the present invention, the above mentioned ethylene/carbon monoxide polymer and photosensitizing material can be blended by any known technique like dry-blending or blending the components as a molten mass. Mixtures of different ethylene/carbon monoxide polymers and photosensitizing materials can also be used.

Before blending the photosensitizing material with the ethylene/carbon monoxide polymer, the photosensitizing agent can be dispersed in a polyolefin like an ethylene or propylene polymer. This polyolefin can be different from or the same as the ethylene polymer in the photodegradable polymer composition of the present invention. Such polyolefins can be used in any amount as long as they are sufficiently compatible with and do not significantly influence the properties of the ethylene polymer composition of the present invention.

The photodegrading agent is very useful in a method for enhancing the photodegradability of an ethylene polymer by mixing the components of the photodegrading agent with the ethylene polymer. By "ethylene polymer" is meant normally solid ethylene polymers suitable for extrusion, casting, molding or similar fabrication and includes the homo- and copolymers of ethylene except ethylene/carbon monoxide polymers. The most preferred ethylene polymers are the high, medium and low density homopolymers of ethylene and copolymers of ethylene in predominant amount with minor amounts (generally up to 20, preferably 5 to 20, percent by weight) of other copolymerizable aliphatic alpha-olefins having from 3 to 18 carbon atoms and mixtures and blends thereof. Such ethylene polymers preferably have melt indexes as determined by ASTM D-1238-65T (E) in the range of from 0.1 to 50 dg/min. and densities in the range of from 0.89 to 0.99 g/ccm. Methods for the preparation of such ethylene polymers are well known in the art for example as taught by Schildknecht, Polymer Processes, Vol. X (1956) or in Chem.Eng. News, 5 December 1977.

Preferred ethylene polymers are linear low density polethylene wherein ethylene has been polymerized with minor amounts of alpha, beta-ethylenically unsaturated alkenes having from 3 to 12, preferably 4 to 8, carbon atoms per alkene molecule.

The linear low density ethylene copolymers preferably used in the present invention are those which are for example prepared using coordination catalysts, e.g., the well known Ziegler, Natta or Phillips catalysts. This includes those made at low, intermediate or high pressures. These ethylene polymers contain minor amounts (generally up to 20 percent, preferably from 5 to 20 percent by weight) of at least one alpha-olefin comonomer selected from the group consisting of propylene, 1-butene, 1-isobutene, 4-methyl-1-pentene, 1-pentene, 1-isopentene, 1-hexene, 1-isohexene, 1-heptene, 1-isoheptene, 1-octene, 1-isooctene, 1-nonene, 1-isononene, 1-decene and 1-isodecene. 1-Octene, 1-hexene, 4-methyl-1-pentene and 1-butene are the most preferred comonomers. The amount of comonomers used should generally be enough to result in polymer densities in the low range of 0.90 to 0.94 g/cm$^3$. The copolymers generally have a high molecular weight and have a melt index (melt flow) in the range of 0.1 to 30 dg/min. as measured by ASTM-D-1238 condition (E).

Further useful ethylene copolymers are the terpolymers disclosed in EP-A-010 428. Preferred ethylene terpolymers are ethylene/1-butene/1-octene or ethylene/propylene/1-octene.

The polyethylene can also be a copolymer of ethylene and a minor amount, for example up to 20 weight percent, preferably from 5 to 20 weight percent, of a diene; cyclo-aliphatic olefin, e.g. 1,5-cyclopentene or cyclooctadiene; a substituted olefin, e.g. a monoethylenically unsaturated carboxylic acid or one of its alkyl esters, a conjugated diolefin like butadiene; or an alkenyl aromatic monomer such as styrene or its derivatives.

The photodegrading agent may be incorporated into the ethylene polymer in any order by any of the techniques known for blending a solid, a liquid or polymeric material with a polymer and a solid or liquid component prior to fabricating the composition into shaped articles. For example, the desired amount of photodegrading agent can be dry-blended with the ethylene polymer and, if desired, further blended on a high temperature mixing device. It is also possible to blend the ingredients of photodegrading agent, i.e., the photosensitizing material, the ethylene/carbon monoxide polymer and optional additives separately with the ethylene polymer. It is also possible to preblend the photosensitizing material with the ethylene polymer and to incorporate the ethylene/carbon monoxide polymer and optional additives into this preblend. The aforementioned ingredients can also be in the form of a solution and/or a dipersion can be admixed with a solution or dispersion of the ethylene polymer in a suitable solvent. The temperature of blending of the aforementioned ingredients with the ethylene polymer is not particularly critical so long as the thermal degradation point of the ethylene polymer or the ethylene/carbon monoxide polymer is not reached. It is further understood that blending should not be carried out under conditions such that the photosensitizing material loses a significant amount of its photosensitizing properties.

In addition to the aforementioned required ingredients, optional additives such as plasticizers, stabilizers, anti-oxidants, anti-static agents, anti-blocking agents, lubricants or fillers can also be added.

The photodegradable ethylene polymer compositions of the present invention comprise generally ethylene polymer and amounts of a photosensitizing material and of an ethylene/carbon monoxide polymer sufficient to measurably enhance photodegradability of the ethylene polymer without having a substantial, deleterious effect on physical properties of the ethylene polymer prior to exposure to ultraviolet light.

The preferred concentrations of the photosensitizing material and of the ethylene/carbon monoxide polymer depend on various factors, for example on the type of ethylene polymer, photosensitizing material and ethylene/carbon monoxide polymer used in the particular polymer composition. In general, the photodegradable compositions comprise from 20, preferably from 50, most preferably from 70, and up to 99, preferably up to 98, most preferably up to 95, weight percent ethylene polymer, based on the total weight of polymers. The amount of the ethylene/carbon monoxide polymer is generally from 1, preferably from 2, most preferably from 5, weight percent and generally up to 80, preferably up to 50, most preferably up to 30, weight percent, based on the total weight of polymers. The photodegradable composition further comprises generally from 25 weight ppm, preferably from 50 weight ppm, most preferably from 100 ppm, and generally up to 25,00 weight ppm, preferably up to 15,000 weight ppm, most preferably up to 2,500 ppm, of a photosensitizing material, based on the total weight of polymers.

Polymers containing high amounts, e.g., 25,000 ppm and higher, of photosensitizing material may be used in combination with polymers containing no photosensitizing material to produce a photodegradable composition having the optimum concentration of photosensitizing material.

The photodegradable ethylene polymer compositions of the present invention can be fabricated by molding, extrusion, casting, blowing or other known techniques into any of a wide variety of shaped articles such as films for use in agriculture, e.g., so-called mulch films; disposable cartons and containers for packaging, for example beverages and other liquids, packaging films, and other applications of ethylene polymers wherein disposal of the polymeric material remains is a problem.

Fabricated ethylene polymer compositions in accordance with this invention have relatively poor stability to ultraviolet light and, within a predictable time, in the presence of sunlight degrade to the extent that shaped articles of these compositions become hard and brittle and finally break and/or crumble into small particles.

The following examples illustrate the invention and should not be considered as limiting its scope. All parts and percentages are by weight unless otherwise indicated. Melt indexes of the ethylene polymers and of the ethylene/carbon monoxide polymers are determined in accordance with ASTM D-1238-65T(E). The components used in the examples are stated in Table I.

**Table I**

| | |
|---|---|
| LLDPE | Linear low density copolymer of ethylene and nominally 6–9 percent 1-octene, based on the polymer weight, the polymer having an average density of 0.920 g/cm$^3$ and a melt index of 1 dg/min. |
| ECO-1 | Ethylene/carbon monoxide copolymer having a melt index of 1.5 dg/min. and containing copolymerized therein 1.1 percent carbon monoxide an 98.9 percent ethylene, based on the total polymer weight. |
| ECO-2 | Ethylene/carbon monoxide copolymer having a melt index of 1.5 dg/min. and containing copolymerized therein 10 percent carbon monoxide and 90 percent ethylene, based on the total polymer weight. |
| ECO-3 | Ethylene/carbon monoxide copolymer having a melt index of 10 dg/min. and containing copolymerized therein 10 percent carbon monoxide and 90 percent ethylene, based on the total polymer weigth. |

A standard phenolic antioxidant is added to all ethylene/carbon monoxide copolymers.
Photosensitizing
material: tris(N,N-di-n-butyldithiocarbamato)iron- (III)

Examples

The photodegradable ethylene polymer compositions are prepared by dry-blending the desired amounts of LLDPE, an ECO and photosensitizing material. All given weight parts in the following examples are based on the total weight of the linear low density polyethylene (LLDPE) and the ethylene/carbon monoxide copolymer (ECO).
The resultant dry-blended materials are then extruded at 220°C to produce films of 12 micrometers thickness on a blown film extrusion line. The resulting film specimens are tested for degradability in a Sairem Sepap UV. chamber. The Sairem Sepap UV chamber emits the radiation from an HBO 500 W lamp producing an intense flux of UV photons between 300 and 400 nm.

Example 1

90 percent LLDPE, 10 percent ECO-3, 400 ppm photosensitizing material are used.

Comparative Example A

LLDPE only is fabricated to a film.

Comparative Example B

100 percent LLDPE and 400 ppm photosensitizing material are used.

Comparative Example C

90 per cent LLFPE and 10 percent ECO-3 are used.
Film samples of Example 1 and of Comparative Examples A to C are tested as follows:
The ultimate elongation at break of 20 film samples of Example 1 is tested. 4 samples are not subjected to UV radiation before the elongation measurement. 4 samples are subjected to UV radiation for 14 hours. 4 samples for 20 hours. 4 samples for 25 hours and 4 samples for 30 hours.
The values listed in Table II below are the average values of four samples.
Measurements of the film samples of Comparative Examples A to C are made in the same fashion.

Table II

| Ultimate elongation at break after subjecting film samples to UV radiation for x hours (percent elongatin) | | | | | | | | | |
|---|---|---|---|---|---|---|---|---|---|
| | 0 h | 14 h | 20 h | 25 h | 30 h | 35 h | 45 h | 65 h | 75 h |
| Comparative Example A | 485 | – | – | – | – | 450 | 480 | 460 | 32 |
| Comparative Example B | 515 | – | – | – | – | 490 | 460 | 380 | 60 |
| Comparative Example C | 485 | 480 | 475 | 450 | 430 | 296 | 50 | – | – |
| Example 1 | 570 | 570 | 565 | 350 | 34 | – | – | – | – |

Table II shows that the film of Example 1 is degraded considerably faster than the films of Comparative Examples A to C. The faster degradation is demonstrated by the time required to make the film brittle (i.e. to give ultimate elongation of < 100 percent at break).
Example 1 illustrates the surprising effect that the combination of the photosensitizing material and the ethylene/carbon monoxide polymer increases the photodegradability of the polyethylene film considerably more than either the photosensitizing material of the ethylene/carbon monoxide polymer separately.

Further Examples

Examples 2-15 are shown in Table III below.

Table III

| Example | Percent LLDE | Percent/type of ECO | Amount of photosensitizing agent (ppm) |
|---|---|---|---|
| 2 | 90 | 10/ECO-1 | 400 |
| 3 | 90 | 10/ECO-2 | 400 |
| 4 | 80 | 20/ECO-1 | 400 |
| 5 | 80 | 20/ECO-2 | 400 |
| 6 | 80 | 20/ECO-3 | 400 |
| 7 | 95 | 5/ECO-1 | 400 |
| 8 | 95 | 5/ECO-2 | 400 |
| 9 | 95 | 5/ECO-3 | 400 |
| 10 | 97 | 3/ECO-3 | 400 |
| 11 | 93 | 7/ECO-3 | 400 |
| 12 | 94 | 6/ECO-3 | 400 |
| 13 | 95 | 5/ECO-3 | 200 |
| 14 | 90 | 10/ECO-3 | 600 |
| 15 | 94 | 6/ECO-3 | 500 |

## Claims

1. A photodegrading agent comprising:
(a) a photosensitizing material selected from heavy metal dithiocarbamates and heavy metal dithiophosphates, said heavy metal having an atomic number greater than 21 exclusive of the metals of Groups 1A, 2A and 3B of Mendeleeff's Periodic Table of Elements and
(b) an ethylene/carbon monoxide polymer.

2. A photodegrading agent according to Claim 1, wherein the photosensitizing material is a heavy metal dithiocarbamate having the formula I:

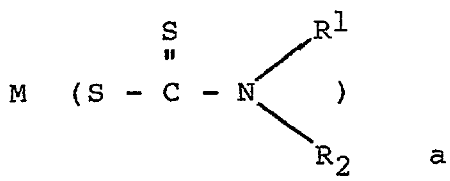

(I)

wherein $R^1$ and $R^2$ are independently a hydrocarbon radical or are joined together to form a heterocyclic ring with the nitrogen atom, a is a whole number corresponding to the valence of M and M is a heavy metal having an atomic number greater than 21 exclusive of the metals of Groups 1A, 2A and 3B of Mendeleeff's Periodic Table of Elements.

3. A photodegrading agent according to Claim 1, wherein the photosensitizing material is tris(N,N-di-n-butyldithiocarbamato)iron (III).

4. A photodegrading agent according to Claim 1, wherein the photosensitizing material is a heavy metal dithiophosphate having the formula II:

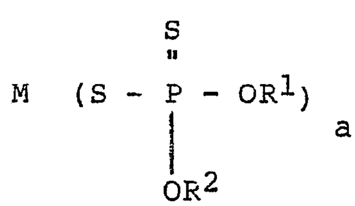

(II)

wherein $R^1$, $R^2$ and a are as defined in Claim 2.

5. A photodegrading agent according to any one of the preceding claims, wherein in the ethylene/carbon monoxide polymer 1 to 20 weight percent carbon monoxide and 99 to 80 weight percent ethylene are copolymerized.

6. A photodegrading agent according to any one of the preceding claims, comprising 100 to 50,000 ppm of the photosensitizing material, based upon the weight of the ethylene/carbon monoxide polymer.

7. A photodegradable ethylene polymer composition containing an ethylene polymer (other than an ethylene/carbon monoxide polymer) and a photodegrading agent according to any one of the preceding claims.

8. A photodegradable ethylene polymer composition according to Claim 7, wherein the ethylene polymer is a homopolymer of ethylene or a copolymer of ethylene and up to 20 weight percent by total polymer weight of a copolymerizable aliphatic alpha-olefin having from 3 to 18 carbon atoms.

9. A photodegradable ethylene polymer composition according to Claim 7 or Claim 8, wherein the ethylene polymer is a linear low density polyethylene produced by polymerization of ethylene and up to 20 percent 1-octene, 1-hexene, 4-methyl-1-pentene or 1-butene, based on the total polymer weight, said polymer having a density of 0.90 to 0.94 g/cm³.

10. A photodegradable ethylene polymer composition according to Claim 9, wherein the ethylene polymer is a linear low density polyethylene produced by polymerization of ethylene and up to 20 percent 1-octene.

11. A photodegradable ethylene polymer composition according to any one of Claims 7 to 10, comprising 50 to 99 weight percent of an ethylene polymer, 50 to 1 weight percent of an ethylene/carbon monoxide polymer and 25 to 25,000 weight ppm of a photosensitizing material, based on the total weight of the polymer composition.

12. A photodegradable ethylene polymer composition according to Claim 11, comprising 70 to 98 weight percent of an ethylene polymer, 30 to 2 weight percent of an ethylene/carbon monoxide polymer and 100 to 2,500 weight ppm of a photosensitizing material, based on the total weight of the polymer composition.

13. An article prepared from a photodegradable ethylene polymer composition of any of Claims 7 to 12.

14. A film prepared from a photodegradable ethylene polymer composition of any of Claims 7 to 12.

15. Use of a photodegrading agent as claimed in any one of Claims 1 to 6 for enhancing the photodegradability of an ethylene polymer (other than an ethylene/carbon monoxide polymer).

16. Use according to Claim 15, wherein the ethylene polymer is as defined in any one of Claims 8 to 10.

17. A method for enhancing the photodegradability of an ethylene polymer (other than an ethylene/carbon monoxide polymer) characterized by mixing a photosensitizing material as defined in Claim 1 and an ethylene/carbon monoxide polymer with said ethylene polymer.

18. A method according to Claim 17, wherein the ethylene polymer is as defined in any one of Claims 8 to 10 and/or the photosensitizing material is as defined in any one of Claims 2 to 4 and/or the ethylene polymer, photosensitizing material and ethylene/carbon monoxide polymer are in the proportions defined in Claim 11 or Claim 12.

## Patentansprüche

1. Fotoabbauendes Mittel enthaltend:

(a) ein fotosensibilisierendes Material ausgewählt aus Schwermetalldithiocarbamaten und Schwermetalldithiophosphaten, wobei das Schwermetall eine Ordnungszahl von größer als 21 besitzt, mit Ausnahme der Metalle der Gruppen 1A, 2A und 3B des Mendeleeff'schen Periodischen Systems der Elemente, und

(b) ein Ethylen/Kohlenmonoxid-Polymer.

2. Fotoabbauendes Mittel nach Anspruch 1, dadurch gekennzeichnet, daß das fotosensibilisierende Material ein Schwermetalldithiocarbamat mit der Formel I ist:

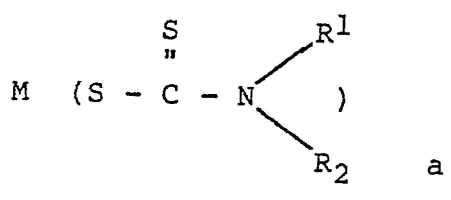

(I)

worin R¹ und R² unabhängig voneinander ein Kohlenwasserstoffradikal bedeuten oder zusammen mit dem Stickstoffatom einen heterocyclischen Ring bilden, a eine ganze Zahl ist, die der Wertigkeit von M entspricht, und M ein Schwermetall mit einer Ordnungszahl von größer als 21 ist, mit Ausnahme der Metalle der Gruppen 1A, 2A und 3B des Mendeleeff'schen Periodischen Systems der Elemente.

3. Fotoabbauendes Mittel nach Anspruch 1, dadurch gekennzeichnet, daß das fotosensibilisierende Material Tris(N,N-di-n-butyldithiocarbamato) Eisen(III) ist.

4. Fotoabbauendes Mittel nach Anspruch 1, dadurch gekennzeichnet, daß das fotosensibilisierende Material ein Schwermetalldithiophosphat mit der Formel II ist:

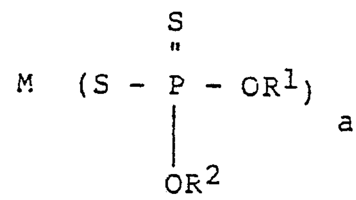 (II)

worin $R^1$, $R^2$ und a die in Anspruch 2 angegebene Bedeutung besitzen.

5. Fotoabbauendes Mittel nach einem der vorhergehenden Ansprüche, dadurch gekennzeichnet, daß in dem Ethylen/Kohlenmonoxid-Polymer 1 bis 20 Gew.-% Kohlenmonoxid und 99 bis 80 Gew.-% Ethylen copolymerisiert sind.

6. Fotoabbauendes Mittel nach einem der vorhergehenden Ansprüche, dadurch gekennzeichnet, daß es 100 bis 50 000 ppm des fotosensibilisierenden Materials, bezogen auf das Gewicht des Ethylen/Kohlenmonoxid-Polymers, enthält.

7. Fotoabbaubare Ethylenpolymer-Zusammensetzung, enthaltend ein Ethylenpolymer (das von einem Ethylen/Kohlenmonoxid-Polymer verschieden ist) und ein fotoabbauendes Mittel nach einem der vorhergehenden Ansprüche.

8. Fotoabbaubare Ethylenpolymer-Zusammensetzung nach Anspruch 7, dadurch gekennzeichnet, daß das Ethylenpolymer ein Homopolymeres von Ethylen oder ein Copolymeres von Ethylen und bis zu 20 Gew.-%, bezogen auf das Gesamtpolymergewicht, eines copolymerisierbaren aliphatischen alpha-Olefins mit 3 bis 18 Kohlenstoffatomen ist.

9. Fotoabbaubare Ethylenpolymer-Zusammensetzung nach Anspruch 7 oder Anspruch 8, dadurch gekennzeichnet, daß das Ethylenpolymer ein lineares Polyethylen niedriger Dichte ist, hergestellt durch Polymerisation von Ethylen und bis zu 20% 1-Octen, 1-Hexen, 4-Methyl-1-penten oder 1-Buten, bezogen auf das Gesamtpolymergewicht, und das Polymere eine Dichte von 0.90 bis 0.94 g/cm³ hat.

10. Fotoabbaubare Ethylenpolymer-Zusammensetzung nach Anspruch 9, dadurch gekennzeichnet, daß das Ethylenpolymer ein lineares Polymer niedriger Dichte ist, hergestellt durch Polymerisation von Ethylen mit bis zu 20% 1-Octen.

11. Fotoabbaubare Ethylenpolymer-Zusammensetzung nach einem der Ansprüche 7 bis 10, dadurch gekennzeichnet, daß es 50 bis 99 Gew.-% eines Ethylenpolymers, 50 bis 1 Gew.-% eines Ethylen/Kohlenmonoxid-Polymers und 25 bis 25 000 ppm (Gewicht) eines fotosensibilisierenden Materials enthält, bezogen auf das Gesamtgewicht der Polymer-Zusammensetzung.

12. Fotoabbaubare Ethylenpolymer-Zusammensetzung nach Anspruch 11, dadurch gekennzeichnet, daß sie 70 bis 98 Gew.-% eines Ethylenpolymers, 30 bis 2 Gew.-% eines Ethylen/Kohlenmonoxid-Polymers und 100 bis 2500 ppm (Gewicht) eines fotosensibilisierenden Materials enthält, bezogen auf das Gesamtgewicht der Polymer-Zusammensetzung.

13. Gegenstand, hergestellt aus einer fotoabbaubaren Ethylenpolymer-Zusammensetzung nach einem der Ansprüche 7 bis 12.

14. Folie, hergestellt aus einer fotoabbaubaren Ethylenpolymer-Zusammensetzung nach einem der Ansprüche 7 bis 12.

15. Verwendung eines fotoabbauenden Mittels nach einem der Ansprüche 1 bis 6 zur Erhöhung der Fotoabbaubarkeit eines Ethylenpolymers (das von einem Ethylen/Kohlenmonoxid-Polymer verschieden ist).

16. Verwendung nach Anspruch 15, dadurch gekennzeichnet, daß das Ethylenpolymer ein in einem der Ansprüche 8 bis 10 definiertes Ethylenpolymer ist.

17. Verfahren zur Erhöhung der Fotoabbaubarkeit eines Ethylenpolymers (das von einem Ethylen/Kohlenmonoxid-Polymer verschieden ist), dadurch gekennzeichnet, daß man ein fotosensibilisierendes Material nach Anspruch 1 und ein Ethylen/Kohlenmonoxid-Polymer mit dem Ethylenpolymer mischt.

18. Verfahren nach Anspruch 17, dadurch gekennzeichnet, daß das Ethylenpolymer ein wie in einem der Ansprüche 8 bis 10 definiertes Ethylenpolymer ist und/oder das fotosensibilisierende Material ein wie in einem der Ansprüche 2 bis 4 definiertes Material ist und/oder das Ethylenpolymer, fotosensibilisierende Material und Ethylen/Kohlenmonoxid-Polymer in den in Anspruch 11 oder Anspruch 12 definierten Anteilen vorliegen.

## Revendications

1. Agent de photodégradation comprenant:

(a) un matériau de photosensibilisation choisi parmi les dithiocarbamates de métal lourd et les dithiophosphates de métal lourd, ledit métal lourd ayant un numéro atomique supérieur à 21, à l'exclusion des métaux des groupes 1A, 2A et 3B du tableau périodique des éléments de Mendeleeff et

(b) un polymère éthylène/monoxyde de carbone.

2. Agent de photodégradation selon la revendication 1, dans lequel le matériau photosensibilisateur est un dithiocarbamate de métal lourd ayant la formule I:

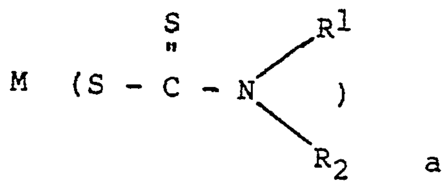

(I)

dans laquelle $R^1$ et $R^2$ désignent, indépendamment l'un de l'autre, un radical hydrocarboné ou sont reliés l'un à l'autre pour former avec l'atome d'azote un noyau hétérocyclique, a est un nombre entier correspondant à la valence de M et M est un métal lourd ayant un numéro atomique supérieur à 21, à l'exclusion des métaux des groupes 1A, 2A et 3B du tableau périodique des éléments de Mendeleeff.

3. Agent de photodégradation selon la revendication 1, dans lequel le matériau photosensibilisateur est le tris(N,N-di-n-butyldithiocarbamato)fer (III).

4. Agent de photodégradation selon la revendication 1, dans lequel le matériau photosensibilisateur est un dithiophosphate de métal lourd ayant la formule II:

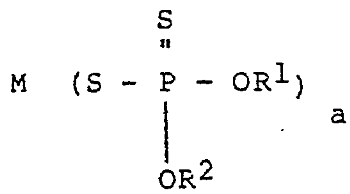

(II)

dans laquelle $R^1$, $R^2$ et a sont tels que définis dans la revendication 2.

5. Agent de photodégradation selon l'une quelconque des revendications précédentes, dans lequel, dans le polymère éthylène/monoxyde de carbone, 1 à 20% en poids de monoxyde de carbone et 99 à 80% en poids d'éthylène sont copolymérisés.

6. Agent de photodégradation selon l'une quelconque des revendications précédentes, comprenant 100 à 50 000 ppm du matériau photosensibilisateur, rapporté au poids du polymère éthylène/monoxyde de carbone.

7. Composition de polymère d'éthylène photodégradable contenant un polymère d'éthylène (autre qu'un polymère éthylène/monoxyde de carbone) et un agent de photodégradation selon l'une quelconque des revendications précédentes.

8. Composition de polymère d'éthylène photodégradable selon la revendication 7, dans laquelle le polymère d'éthylène est un homopolymère d'éthylène ou un copolymère d'éthylène et de jusqu'à 20% en poids, rapportés au poids total du polymère, d'une alpha-oléfine aliphatique copolymérisable ayant de 3 à 18 atomes de carbone.

9. Composition de polymère d'éthylène photodégradable selon la revendication 7 ou 8, dans laquelle le polymère d'éthylène est un polyéthylène linéaire basse densité produit par polymérisation de l'éthylène et de jusqu'à 20%, rapporté au poids total de polymère, de 1-octène, 1-hexène, 4-méthyl-1-pentène ou 1-butène, ledit polymère ayant une densité de 0,90 à 0,94 g/cm³.

10. Composition de polymère d'éthylène photodégradable selon la revendication 9, dans laquelle le polymère d'éthylène est un polyéthylène linéaire basse densité produit par polymérisation de l'éthylène et de jusqu'à 20% de 1-octène.

11. Composition de polymère d'éthylène photodégradable selon l'une quelconque des revendications 7 à 10, comprenant 50 à 99% en poids d'un polymère d'éthylène, 50 à 1% en poids d'un polymère éthylène/monoxyde de carbone et 25 à 25 000 ppm en poids d'un matériau photosensibilisateur, les pourcentages étant rapportés au poids total de la composition de polymère.

12. Composition de polymère d'éthylène photodégradable selon la revendication 11, comprenant 70 à 98% en poids d'un polymère d'éthylène, 30 à 2% en poids d'un polymère éthylène/monoxyde de carbone et 100 à 2500 ppm en poids d'un matériau photosensibilisateur, les pourcentages étant rapportés au poids total de la composition de polymère.

13. Article préparé à partir d'une composition de polymère d'éthylène photodégradable selon l'une quelconque des revendications 7 à 12.

14. Film préparé à partir d'une composition de polymère d'éthylène photodégradable selon l'une quelconque des revendications 7 à 12.

15. Utilisation d'un agent de photodégradation tel que revendiqué dans l'une quelconque des revendications 1 à 6 pour augmenter la photodégradabilité d'un polymère d'éthylène (autre qu'un polymère éthylène/monoxyde de carbone).

16. Utilisation selon la revendication 15, dans laquelle le polymère d'éthylène et tel que défini dans l'une quelconque des revendications 8 à 10.

17. Procédé pour augmenter la photodégradabilité d'un polymère d'éthylène (autre qu'un polymère

éthylène/monoxyde de carbone) caractérisé en ce qu'on mélange un matériau photosensibilisateur tel que défini dans la revendication 1 et un polymère éthylène/monoxyde de carbone avec ledit polymère d'éthylène.

18. Procédé selon la revendication 17 dans lequel le polymère d'éthylène est tel que défini dans l'une quelconque des revendications 8 à 10 et/ou le matériau photosensibilisateur est tel que défini dans l'une quelconque des revendications 2 à 4 et/ou le polymère d'éthylène, le matériau photosensibilisateur et le polymère éthylène/monoxyde de carbone sont dans les proportions définies dans la revendication 11 ou 12.